# EUROPÄISCHE PATENTSCHRIFT

(11) **EP 1 397 412 B1**
(45) Veröffentlichungstag und Bekanntmachung des Hinweises auf die Patenterteilung: **20.04.2005**
(21) Anmeldenummer: 02732622.2
(22) Anmeldetag: 16.04.2002
(51) Int. Cl.: C08G 63/78, C08G 63/85, C08G 63/183

(54) **VERFAHREN ZUR HERSTELLUNG VON POLYBUTYLENTEREPHTHALAT**
METHOD FOR THE PRODUCTION OF POLYBUTYLENE TEREPHTHALATE
PROCEDE DE PRODUCTION DE POLYBUTYLENE TEREPHTALATE

(30) Priorität: 02.06.2001 DE 10127146
(43) Veröffentlichungstag der Anmeldung: 17.03.2004
(73) Patentinhaber: Zimmer AG, 60388 Frankfurt (DE)
(72) Erfinder: SEIDEL, Eckhard, 60389 Frankfurt am Main (DE); WILHELM, Fritz, 61184 Karben (DE)
(74) Vertreter: Meyer-Dulheuer, Karl-Hermann, Dr.
(86) Internationale Anmeldenummer: PCT/EP2002/004182
(87) Internationale Veröffentlichungsnummer: WO 2002/098947

(56) Entgegenhaltungen:
- WO-A-99/28033
- US-A- 6 166 170

## Beschreibung

Die Erfindung betrifft ein Verfahren zur Herstellung von Polybutylenterephthalat (PBT) aus Butandiol (BDO) und Terephthalsäure (TPA) oder aus Butandiol (BDO) und Dimethylterephthalat (DMT), bei dem ein Gemisch aus BDO und TPA oder BDO und DMT in Gegenwart von Alkyltitanat enthaltender Katalysatorlösung bei Temperaturen im Bereich von 130 bis 260 °C einer Veresterung bzw. Umesterung und anschließend einer Polykondensation unterworfen wird.

Bekanntlich wird PBT aus TPA oder DMT durch Umsetzung mit BDO unter Einsatz von Katalysatoren hergestellt. Aus der Vielzahl verwendeter Katalysatoren haben sich insbesondere Alkyltitanate, vorzugsweise Tetrabutylorthotitanat und Tetraisopropylorthotitanat auf Grund ihrer Effizienz und großtechnischen Verfügbarkeit durchgesetzt (Ullmann's Encyklopedia of Industrial Chemistry, 5. Auflage, Band A 21, Seite 237). Die Alkyltitanate besitzen Eigenschaften, die sich bei der Herstellung von PBT nachteilig auswirken, weil sie zur Hydrolyse neigen und insbesondere beim Verfahren zur Herstellung von PBT auf Basis von TPA bei der Veresterung unlösliche Partikel bilden, die nicht nur die Standzeiten der Filter für die PBT-Schmelze verkürzen, sondern auch die Qualität des hergestellten PBT beeinträchtigt. In Folge ihrer Flüchtigkeit, thermischen Zersetzbarkeit und leichten Reduzierbarkeit können Alkyltitanate auch titanhaltige dunkel Abscheidungen an den Reaktorwänden und in der Prozesskolonne bilden, die die Qualität des hergestellten PBT beeinträchtigen.

Um die negativen Effekte von Alkyltitanat bei der Herstellung von PBT zu vermeiden, sind verschiedene Stabilisierungsmethoden für die Katalysatoren bekannt (WO-A-99/45 056), indem diesen zusätzliche prozessfremde Stoffe zugesetzt sind, die aber wiederum Nachteile mit sich bringen.

Der Erfindung liegt die Aufgabe zu Grunde, eine hydrolyse- und lagerstabile Katalysatorlösung mit verbesserter Reaktivität bereitzustellen, die bei der Herstellung von PBT, insbesondere auch bei der Veresterung keine Ablagerungen bildet. Darüber hinaus sollen schädliche Einflüsse auf das hergestellte PBT sowie auch störende Rückstände auf den Produktschmelzefiltern vermieden werden.

Gelöst ist diese Aufgabe dadurch, dass die Katalysatorlösung 0,05 bis 10 Gew.-% Alkyltitanat, 85 bis 99 Gew.-% BDO, 50 bis 50.000 ppm, vorzugsweise 50 bis 30.000 ppm Dicarbonsäure und/oder Hydroxycarbonsäure und höchstens 0,5 Gew.-% Wasser enthält. Eine solche Katalysatorlösung bildet eine klare, partikelfreie Mischung der angeführten Komponenten.

Die Katalysatorlösung ist sowohl für die kontinuierliche als auch die diskontinuierliche Herstellung von PBT durch Veresterung von TPA mit BDO als auch für die Umesterung von DMT mit BDO geeignet. Die Katalysatorlösung kann unter inerten Bedingungen dauerhaft bei Temperaturen oberhalb von 25 °C in flüssigem und bei Temperaturen unterhalb von 20 °C auch in festem Zustand gelagert werden. Ein entscheidender Vorteil der Katalysatorlösung ist, dass ihre hervorragende Stabilität auf der Verwendung prozesskonformer Komponenten, die vollständig in das hergestellte PBT eingebaut sind und nicht als nachteilig wirkendes Nebenprodukt zurückbleiben, beruht. Als besonders vorteilhaft hat sich die Verwendung von TPA oder Isophthalsäure in BDO als Lösungsvermittler für Alkyltitanat herausgestellt, da dadurch die Polymereigenschaften von TPT nicht oder nur unwesentlich beeinflusst werden.

Die Herstellung der Katalysatorlösung erfolgt dadurch, dass zunächst eine Vorlösung durch Mischen von BDO mit Alkyltitanat bei Temperaturen von 50 bis 230 °C erzeugt und dieser Vorlösung Dicarbonsäure und/oder Hydroxycarbonsäure und/oder Hydroxyalkyldicarbonsäuremonoester zugesetzt wird.

Eine andere Möglichkeit zur Herstellung der Katalysatorlösung besteht darin, dass zunächst eine Vorlösung durch Mischen von BDO mit Dicarbonsäure und/oder Hydroxycarbonsäure und/oder Hydroxyalkyldicarbonsäuremonoester bei Temperaturen von 50 bis 230 °C erzeugt und dieser Vorlösung Alkyltitanat zugegeben wird. Die Katalysatorlösungen dürfen nur einen begrenzten Wassergehalt von höchstens 0,5 Gew.-% aufweisen, da bei einem größeren Wassergehalt bei der weiteren Verarbeitung Trübungen oder Ausfällungen entstehen können. Die Katalysatorlösungen weisen einen Trübungswert NTU (Normal Turbility Unit) von ≤ 1 auf. Der NTU-Wert, der einen Maßstab für die Trübung von Lösungen darstellt, wird an einer 10 Gew.-%-igen Lösung von Polyester in Phenol/Dichlorbenzol (3:2 Gew.-Teile) im Nephelometer der Firma Hach (Typ XR, nach US-Patent 4 198 161) mit einer Küvette von 22, 2 mm Durchmesser in Analogie zu der für Wasser gebräuchlichen DIN-Norm 38 404, Teil 2 bestimmt. Dabei wird die Intensität des Streulichts im Vergleich zu einer Formalinstandardlösung abzüglich des Wertes vom Lösungsmittel (ca. 0,3 NTU) gemessen wird. Lösungen mit NTU-Werten ≤ 2 sind vollständig klar; bei NTU-Werten ≥ 2 treten zunehmend Trübungen auf.

Für die Herstellung der Katalysatorlösungen sind sowohl aromatische als auch aliphatische Dicarbonsäuren einzeln oder zu mehreren als Gemisch einsetzbar. Aromatische Dicarbonsäuren sind u.a. TPA und Isophtalsäure. Zu den aliphatischen Dicarbonsäuren gehören u.a. Oxalsäure, Malonsäure, Bernsteinsäure und Adipinsäure. Die Dicarbonsäuren sind ganz oder teilweise durch aromatische und aliphatische Hydroxycarbonsäuren und/oder Hydroxyalkyldicarbonsäuremonoester, insbesondere Hydroxybutylterephthalsäuremonoester ersetzbar. Aromatischen Hydroxycarbonsäuren sind u.a. 3-Hydroxybenzeosäure und 4-Hydroxybenzoesäure. Aliphatischen Hydroxycarbonsäuren sind u.a. Hydroxybuttersäure, Hydroxypropionsäure und Glykolsäure. Es können auch Gemische dieser Hydrooxycarbonsäuren eingesetzt werden. Die Hydroxyalkyldicarbonsäuremonoester werden im Prozess aus TPA und BDO gebildet. Als Alkyltitanat haben sich insbesondere Tetrabutylorthotitanat und Tetraisopropyltitanat als geeignet erwiesen.

Zur Herstellung von PBT ist es möglich, die Katalysatorlösung im Verfahren an einer Stelle oder gleichzeitig auch an mehreren Stellen zu dosieren. So kann die Katalysatorlösung beispielsweise bereits dem Pastenansatz oder in eine nachfolgende Prozessstufe oder in eine Schmelzetransferleitung zudosiert werden. Möglich ist auch, die Katalysatorlösung in den Rücklaufstrom des BDO von der Prozesskolonne zur ersten Prozessstufe und gegebenenfalls in eine nachfolgende Prozessstufe einzuspeisen.

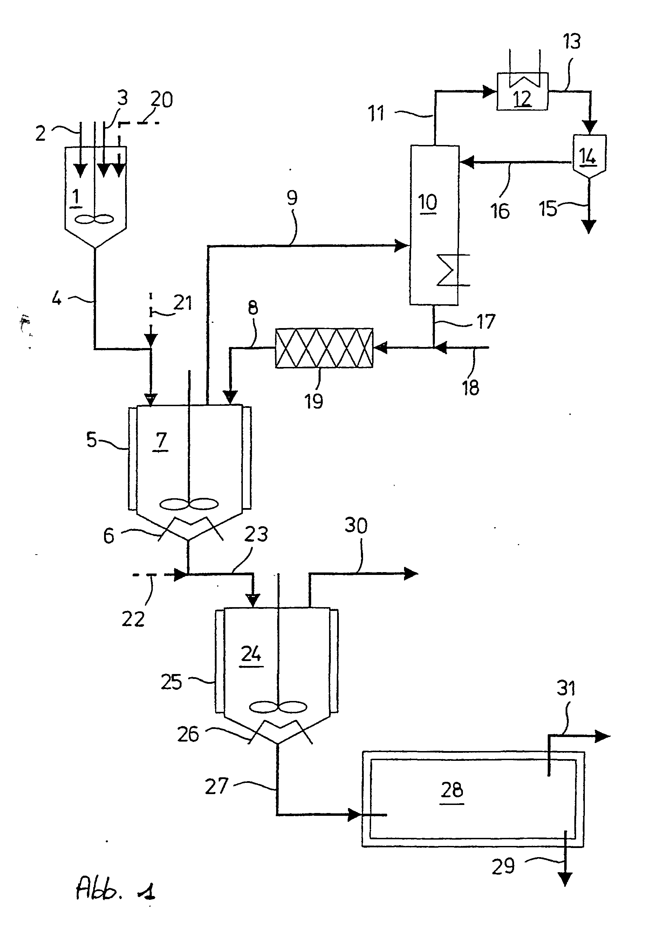

In der Zeichnung ist das Verfahren zur Herstellung von PBT aus BDO und TPA als apparatives Fließbild beispielhaft dargestellt und wird nachfolgend näher erläutert:

Einem Rührbehälter (1) werden über Leitung (2) TPA und über Leitung (3) BDO zugeführt und zu einer Paste gemischt, die über Leitung (4) in einen mit einem Heizmantel (5) umgebenen und mit einem zusätzlichen Heizelement (6) ausgerüsteten Rührreaktor (7) zur Veresterung eingespeist wird. Bei der Veresterung entstehen ein flüssiges BDO-Oligomeren-Gemisch und Dampf, letzterer besteht im wesentlichen aus Wasser, BDO-Tetrahydrofuran (THF). Im Falle der Umesterung von DMT im Rührreaktor (7) enthält der gebildete Dampf im wesentlichen Methanol, BDO, THF und Wasser. Die Veresterung im Rührreaktor (7) erfolgt in Gegenwart der über Leitung (8) zugeführten Katalysatorlösung. Der im Rührreaktor (7) gebildete Dampf verlässt über Leitung (9) den Rührreaktor (7) und wird der Destillationskolonne (10) zugeführt, in der Wasser und THF über Kopf abgetrennt werden. Das Kopfprodukt der Destillationskolonne (10) wird über Leitung (11) dem Kühler (12) zugeführt, aus dem das Kondensat über Leitung (13) zu dem Rücklaufverteiler (14) läuft. Aus dem Rücklaufverteiler (14) werden Wasser und THF über Leitung (15) abgezogen und der Rücklauf über Leitung (16) zu Kopf der Destillationskolonne (10) zurückgeführt. Aus dem Sumpf der Destillationskolonne wird über Leitung (17) ein aus schwerer siedenden Komponenten bestehendes, üblicherweise 90 bis 99 Gew.-% BDO, 50 bis 3000 ppm Dicarbonsäure und Hydroxyalkyldicarbonsäuremonoester enthaltendes Gemisch abgezogen, die durch Monomeren-Verdampfung und eine, gegebenenfalls durch nachfolgende Hydrolyse von Esterbindungen entsteht. Über Leitung (18) wird dem in Leitung (17) strömenden Gemisch Alkyltitanat zudosiert, so dass die für die Katalysatorlösung gewünschte Zusammensetzung entsteht. Im Falle der Umesterung von DMT ist es vorteilhaft, neben Alkyltitantat Dicarbonsäure oder Hydroxycarbonsäure im Gewichts-Verhältnis Titan : Säure von 10 : 1 bis 1 : 10 über Leitung (18) als Vorlösung in Leitung (17) einzuspeisen. Das Gemisch aus schwerer siedenden Komponenten und Katalysatorlösung durchläuft eine Mischstrecke (19), in der die Homogenisierung durch statische Mischelemente auf einem relativ kurzen Strömungsweg erreicht wird. Über Leitung (8) gelangt dann die fertige Katalysatorlösung in den Rührreaktor (7). Die Katalysatorlösung kann ganz oder teilweise auch über Leitung (20) dem Rührbehälter (1) aufgegeben, und/oder über Leitung (21) in die Leitung (4) dem Pastenstrom und/oder über Leitung (22) in die Transferleitung (13) für das aus dem Rührreaktor (7) entstandene Veresterungsprodukt zum Rührreaktor (24) zur Vorkondensation eingespeist werden. Der Rührreaktor (24) besitzt einen Heizmantel (25) und ein zusätzliches Heizelement (26). Über Leitung (27) wird das aus dem Reaktor (24) stammende Prepolymer dem Reaktor (28) der Polykondensation zugeführt. Das erzeugte PBT wird über Leitung (29) abgepumpt. Über Leitung (30) werden die gebildeten Dämpfe aus dem Rührreaktor (24) und über Leitung (31) aus dem Reaktor (28) abgesaugt. Die Temperaturen in den Reaktoren (7, 24, 28) liegen im Bereich von 130 bis 260 °C.

Das erfindungsgemäße Verfahren ist nachstehend durch mehrere Ausführungsbeispiele näher erläutert.
1.0 Herstellung von Vorlösungen für die Katalysatorlösungen
1.1 97,85 Gew.-% BDO mit einem Wassergehalt von 0,3 Gew.-% werden mit 0,05 Gew.-% TPA versetzt und unter Rühren auf eine Temperatur von 80 °C erhitzt, bei dieser Temperatur 30 min. lang gehalten und dann auf Raumtemperatur abgekühlt. Die Vorlösung ist klar, es bilden sich keine Ausfällungen und der NTU-Wert beträgt 0,36. Bei Lagerung der Vorlösung unter Luftabschluss bei einer Temperatur von 25 °C behält diese über eine Dauer von 14 Tagen ihre Konsistenz, wie ein unveränderte NTU-Wert zeigt.
   Für den Fall, dass die Vorlösung ohne Erhitzung auf eine Temperatur von 80 °C erzeugt wird, bilden sich innerhalb von 24 h Ausfällungen.
1.2 96,5 Gew.-% BDO mit einem Wassergehalt von 0,15 Gew.-% werden mit 1,5 Gew.-% Isophtalsäure versetzt und unter Rühren auf eine Temperatur von 80 °C erhitzt, 30 min. lang bei dieser Temperatur gehalten und dann auf Raumtemperatur abgekühlt. Die Vorlösung ist klar, es bilden sich keine Ausfällungen. Der NTU-Wert beträgt 0,35. Bei Lagerung unter Luftabschluss bei einer Temperatur von 25 °C bleibt die Konsistenz der Vorlösung über eine Dauer von 14 Tagen erhalten. Der NTU-Wert bleibt unverändert.

2.0 Herstellung von Katalysatorlösungen
2.1 Es werden der gemäß Beispiel 1.1 erzeugten Vorlösung bei einer Temperatur von 40 °C 2,1 Gew.-% Tetrabutylorthotitanat unter Rühren zugegeben und das Rühren bei einer Temperatur von 80 °C eine Stunde lang fortgesetzt. Die gebildete Katalysatorlösung ist klar, besitzt eine gelbliche Eigenfarbe und einen NTU-Wert von 0,50. Die unter Luftabschluss bei einer Temperatur von 25 °C über eine Dauer von 14 Tagen gelagerte Katalysatorlösung behält ihre Konsistenz, was durch einen NTU-Wert von 0,44 belegt wird.
2.2 Es werden der nach Beispiel 1.2 erzeugten Vorlösung bei einer Temperatur von 40 °C 2,1 Gew.-% Tetrabutylorthotitanat unter Rühren zugesetzt und das Rühren bei einer Temperatur von 80 °C eine Stunde lang fortgesetzt. Die auf diese Weise erzeugte Katalysatorlösung behält bei einer Lagerungstemperatur von 25 °C und unter Luftabschluss für die Dauer von 14 Tagen ihre Konsistenz, wie NTU-Wert = 0,91 zeigt.
2.3 Es werden der nach Beispiel 1.2 hergestellten Vorlösung bei einer Temperatur von 40 °C 7,1 Gew.-% Tetrabutylorthotitanat unter Rühren zugegeben und das Rühren bei einer Temperatur von 80 °C eine Stunde lang fortgesetzt. Die erzeugte Katalysatorlösung ist klar und behält unter Luftabschluss bei einer Lagerungstemperatur von 25 °C über eine Dauer von 14 Tagen ihre Konsistenz. Der NTU-Wert beträgt 0,89.
2.4 97,4 Gew.-% BDO werden mit 2,1 Gew.-% Tetrabutylorthotitanat vermischt und unter Rühren auf 80 °C erwärmt, dann 0,5 Gew.-% TPA zugegeben, unter Rühren auf eine Temperatur von 160 °C erhitzt und über eine Stunde bei dieser Temperatur gehalten, wobei TPA vollständig gelöst wird. Nach Abkühlung auf Raumtemperatur besitzt die Katalysatorlösung einen NTU-Wert von 0,66. Die Katalysatorlösung behält bei einer Lagerungsdauer von 14 Tagen bei einer Temperatur von 25 °C unter Luftabschluss ihre Konsistenz. Der NTU-Wert bleibt unverändert.
   Ebenso klare Katalysatorlösungen ergeben sich, wenn an Stelle von TPA die gleiche Menge p-Hydroxybenzoesäure oder Malonsäure eingesetzt wird; Proben dieser Katalysatorlösung zeigen einen NTU-Wert von 0,69 für p-Hydroxybenzoesäure und einen NTU-Wert von 0,79 für Malonsäure.
2.5 Einer Probe des Rücklaufs des BDO aus dem Sumpf der Prozesskolonne einer kontinuierlichen Anlage zur Veresterung von TPA und BDO, die 3000 ppm TPA-Äquivalente auf Grund der gemessenen Säurezahl enthält, werden bei einer Temperatur von 85 °C 2 Gew.-% Tetrabutylorthotitanat zudosiert. Die gebildete Katalysatorlösung ist mit einem NTU-Wert = 0,51 klar; sie behält während einer Lagerungsdauer von 14 Tagen bei einer Temperatur von 25 °C ihre Konsistenz.
2.6 In den 190 °C heißen Rücklaufstrom des BDO aus dem Sumpf der Prozesskolonne, der 3000 ppm TPA-Äquivalente enthält, wird Tetrabutylorthotitanat mit einer Temperatur von 25 °C in einer Menge von 0,07 Gew.-% dosiert und in einer Mischstrecke bestehend aus 6 statischen Mischern mit dem BDO vermischt. Die resultierende Katalysatorlösung wird als modifizierter Rücklauf aus der Prozesskolonne in den Veresterungsreaktor gespeist, wobei eine Titankonzentration von 100 ppm bezogen auf PBT eingestellt wird. Diese Katalysatorlösung weist einen NTU-Wert von 0,57 auf, ihre Konsistenz bleibt über eine Lagerungsdauer von 14 Tagen bei einer Temperatur von 25 °C erhalten.

Die Konsistenz der gemäß den Beispiel 2.2, 2.2, 2.3 und 2.4 hergestellten Katalysatorlösungen unter Einwirkung von Feuchtigkeit wird bei Raumtemperatur geprüft, indem Proben von Katalysatorlösungen von jeweils 100g und einer Temperatur von 25 °C mit 0,5g, 1,2g und 5,0g Wasser versetzt werden, so dass sich der Wassergehalt des BDO ausgehend von einem anfänglichen Wassergehalt von 0,3 Gew.-% auf 0,8g, 1,5g und 6,3g erhöht. Bei Lagerung unter Luftabschluss für die Dauer von 14 Tagen bei einer Temperatur von 25 °C bleibt die Konsistenz der Katalysatorlösungen mit einem Wassergehalt von 0,8g unverändert. Es hat sich weiter gezeigt, dass Katalysatorlösungen, die einen Wassergehalt von ≥ 1g aufweisen, bereits nach 2 Stunden trüb werden und sich innerhalb von 4 Tagen ein irreversibler Niederschlag bildet.
3.0 Diskontinuierliche Herstellung von PBT-Prepolymer
3.1 Ein 5 l- Rührreaktor wird mit 22,5 g einer nach Beispiel 2.2 hergestellten Katalysatorlösung, 1127 g TPA (einschließlich der in der Katalysatorlösung gelösten Menge) und 1813 g BDO (einschließlich des in der Katalysatorlösung enthaltenen BDO) beschickt. Die Befüllung wird nach dreimaliger Inertisierung mit Stickstoff innerhalb von 2 Stunden unter Rühren auf eine Temperatur von 235 °C bei Normaldruck aufgeheizt und bei dieser Temperatur über 2 Stunden bei einem Druck von 400 mbar verestert. Danach folgt über eine Dauer von insgesamt 100 min. eine Vorkondensation bei einer Temperatur von 240 °C, einem Druck von 50 mbar und einer Rührgeschwindigkeit von 100 min⁻¹.
   Nach Beendigung der Vorkondensation wird die Schmelze mittels Stickstoff als Strahl aus dem Reaktor gedrückt und auf eine mit flüssigem Stickstoff gekühlte Pfanne aufgefangen und erstarrt. Zur Analyse wird das Produkt gemahlen und dessen Intrinsische Viskosität und Filterbelastungswert bestimmt. Die ermittelten Werte sind in der nachfolgenden Tabelle 1 wiedergegeben.

Die Intrinsische Viskosität (IV) wird bei 25 °C an einer Lösung von 500 mg Polyester in 100 ml eines Gemisches aus Phenol um 1,2-Dichlorbenzol (3:2 Gewichtsteile) gemessen und stellt ein Maß für das Molekülgewicht der Probe dar.
Das Filtrationsverhalten der Produktschmelzen ergibt sich durch Messung des für die Reinheit der Produkte charakteristischen Filterbelastungswertes, indem das bei einer Temperatur von 130 °C und unter einem reduzierten Druck von < 1mbar über 13 Stunden getrocknetes PBT-Prepolymer in einem Laborextruder aufgeschmolzen und durch einen Scheibenfilter mit einer Maschenweite von 15 µm und einer Filterfläche von 2,83 cm² mittels Zahnradpumpe bei einer Temperatur von 260 °C gedrückt wird. Die Druckzunahme vor dem Filter wird in Bezug auf die geförderte Schmelzemenge aufgezeichnet und die Filtrierbarkeit als Filterbelastungswert (FW) berechnet: FW = Druckanstieg Δ p [bar] • Filterfläche [cm²] / Schmelzemenge [kg].
3.2 Zur diskontinuierlichen Herstellung von PBT-Prepolymer wird unter sonst gleichen Verfahrensbedingungen wie im Beispiel 3.1 eine nach dem Beispiel 2.3 erzeugte Katalysatorlösung benutzt. Die Werte für die Intrinsische Viskosität und für die Filterbelastung sind in Tabelle 1 wiedergegeben.
3.3 Zur diskontinuierlichen Herstellung von PBT-Prepolymer wird, wie im Beispiel 3.1 beschrieben, TPA und BDO zusammen mit 76,6 g Katalysatorlösung bei Verwendung von p-Hydroxybenzoesäure nach Beispiel 2.4 eingesetzt. Das hergestellte Produkt besitzt die in Tabelle 1 für die Intrinsische Viskosität und die Filterbelastung angegebenen Werte.
3.4 In einem 5 l- Rührreaktor werden 13,2 g einer nach dem Beispiel 2.3 hergestellten Katalysatorlösung, 1316 g DMT und 900 g BDO (einschließlich des BDO in der Katalysatorlösung) eingefüllt. Nach dreimaligen Inertisieren mit Stickstoff wird die Charge unter Rühren bei Normaldruck innerhalb von einer Stunde auf eine Temperatur von 150 °C aufgeheizt, 30 min lang bei dieser Temperatur gehalten und anschließend innerhalb von 2 Stunden auf eine Temperatur von 235 °C aufgeheizt. Dabei wir das umgeesterte Produkt bei einer Temperatur von 240 °C, einem Druck von 50 mbar über die Dauer von 100 min und einer Rührgeschwindigkeit von 100 min⁻¹ vorkondensiert. Nach Beendigung der Prepolykondensation wird die Schmelze mittels Stickstoff als Strang aus dem Reaktor gedrückt und auf eine mit flüssigem Stickstoff gekühlte Pfanne aufgefangen. Die Intrinsische Viskosität und die Filterbelastung werden am gemahlenen Produkt analysiert und sind in Tabelle 1 wiedergegeben.
3.5 Zum Zwecke des Vergleichs wird zur diskontinuierlichen Herstellung von PBT-Prepolymer unter sonst gleichen Verfahrensbedingungen wie im Beispiel 3.1 als Katalysatorlösung Tetrabytylorthotitanat bei Raumtemperatur direkt mit BDO gemischt. Der an dem gemahlenen Produkt ermittelte Wert für die Intrinsische Viskosität ist unverändert, während die Filterbelastung um ein Vielfaches erhöht ist, wie in Tabelle 1 dargestellt.

**Tabelle 1**

| | | Beispiele | | | | Vergleichsbeispiel |
|---|---|---|---|---|---|---|
| | | 3.1 | 3.2 | 3.3 | 3.4 | 3.5 |
| IV | dl/g | 0,168 | 0,170 | 0,174 | 0,174 | 0,165 |
| Filterbelastungswert | bar • cm²/kg | 5 | 7 | 6 | 6 | 138 |

4.0 Diskontinuierliche Polykondensation von PBT-Prepolymeren
Im Anschluss an die Herstellung der PBT-Prepolymere im 51 - Rührreaktor wird eine Polykondensation bei einer Temperatur von 245 °C und einem Vakuum von 0,5 bar über eine Zeit von insgesamt 180 min durchgeführt. Die anfängliche Drehzahl beträgt 100 min⁻¹; nach Erreichen eines bestimmten Referenzmoments wird die Drehzahl bei diesem konstanten Moment bis auf etwa 30 min⁻¹ zurückgeführt, womit vergleichbare Werte für die Intrinsischen Viskositäten erreicht werden. Im Anschluss an die Polykondensation wird die Produktschmelze als Strang aus dem Rührreaktor gepresst, durch eine Kühlwanne geführt und zu Chips geschnitten. In nachfolgender Tabelle 2 sind die Messergebnisse für die Intrinsische Viskositäten und die Filterbelastung dieser aus den Prepolymeren gemäß den Beispielen 3.1, 3.2, 3.3, 3.4 und 3.5 hergestellten Polymere wiedergegeben. Zusätzlich sind die Ergebnisse der COOH-Endgruppenbestimmung angeführt.
Die COOH-Endgruppenkonzentration wird mittels photometrischer Titration mit 0,05 äthanolischer Kalilauge gegen Bromthymolblau einer Lösung eines Polyesters in einem Gemisch aus o-Kresol und Chloroform (70:30 Gewichtsteile) bestimmt.

**Tabelle 2**

| | | Prepolymere aus Beispielen | | | | Vergleichsbeispiel |
|---|---|---|---|---|---|---|
| | | 3.1 | 3.2 | 3.3 | 3.4 | 3.5 |
| IV | dl/g | 0,847 | 0,860 | 0,855 | 0,852 | 0,860 |
| Filterbelastungswert | bar• cm²/kg | 10 | 9 | 11 | 10 | 98 |
| COOH-Endgruppen | meq./kg | 12 | 13 | 13 | 12 | 13 |

5.0 Kontinuierliche Herstellung von PBT-Prepolymer mit anschließender diskontinuierlicher Polykondensation
5.1 In einem Pastenmischer werden TPA und BDO im Molverhältnis von 1 : 1,5 angerührt und über eine Zahnradpumpe in einer Menge von 2.66 kg/h stationär in einen mantelbeheizten ersten gerührten Reaktor dosiert. Zusätzlich wird in den Sumpf des ersten Reaktors Katalysatorlösung, hergestellt gemäß Beispiel 2.5, mit einem Gehalt von 120 ppm Titan, bezogen auf das Polymer, zusammen mit 1.193 kg/h Mol BDO, bezogen auf TPA, eingespeist. Die Verweilzeit des Veresterungsprodukts im ersten Reaktor beträgt 80 min, die Temperatur 245 °C und der Druck 400 mbar unter Beibehaltung einer konstanten Füllhöhe im ersten Reaktor. Der dabei gebildete Dampf aus Wasser, BDO und THF wird über Kopf kontinuierlich abgezogen, in gekühlten Rezipienten aufgefangen und periodisch der Probenahme zugeführt. Das Veresterungsprodukt gelangt aus dem ersten Reaktor über eine Verbindungsleitung mit Drosselventil zu einem zweiten gerührten Reaktor, in dem das es während einer Verweilzeit von 30 min bei einer Temperatur von 250 °C und einem Druck von 50 mbar unter Beibehaltung einer konstanten Füllhöhe behandelt wird. Der in dem zweiten Reaktor gebildete aus BDO und leichter siedenden Komponenten bestehende Dampf wird über Kopf kontinuierlich abgezogen, in gekühlten Vorlagen aufgefangen und in entsprechender Weise abgeführt. Das in dem zweiten Reaktor entstandene Prepolymer wird über eine Zahnradpumpe in einer Menge von 2 kg/h ausgetragen, in stündlich wechselnden, mit flüssigen Stickstoff gekühlten Metallgefäßen aufgefangen und eingefroren. Eine Probe des Prepolymers wird gemahlen; es betragen die Intrinsische Viskosität 0,256 [dl/g] und die Filterbelastung 18 [bar •cm²/kg].
5.2 Zum Vergleich werden bei der vorstehend beschriebenen kontinuierlichen Herstellung von PBT-Prepolymer anstelle von Katalysatorlösung 2,1 Gew.-% Tetrabutylorthotitanat bei Raumtemperatur eingesetzt. Die analytischen Kennworte einer gemahlenen Probe des Prepolymers betragen für die Intrinsische Viskosität 0,257 [dl/g] und für die Filterbelastung 293 [bar • cm²/kg].
5.3 Das gemäß Beispiel 5.1 erzeugte PBT-Prepolymer wird unmittelbar nach der Herstellung einer diskontinuierlichen Polykondensation, wie diese im Beispiel 4.0 beschrieben ist, unterworfen. An einer gemahlenen Probe des auf solche Weise hergestellten Polymers werden die Intrinsische Viskosität mit 0,856 [dl/g], die Filterbelastung mit 15 [bar • cm²/kg] und die COOH-Endgruppen mit 14 [meq/kg] bestimmt.
5.4 Den gleichen Verfahrensbedingungen, wie im Beispiel 4.0 dargestellt, wird das gemäß Beispiel 5.2 hergestellte PBT-Prepolymer unterworfen. Eine Probe des Polymers wird gemahlen; die Kennwerte betragen für die Intrinsische Viskosität 0,862 [dl/g], für die Filterbelastung 308 [bar • cm²/kg] und für die COOH-Endgruppen 15 [meq/kg].

Die ermittelten Filterbelastungswerte für die Prepolymere und die Polymere zeigen, dass mit der erfindungsgemäß zusammengesetzten Katalysatorlösungen eine PBT-Veresterung bzw. DMT-Umesterung ohne das Auftreten von Ausfällungen gewährleistet ist.

## Patentansprüche

1. Verfahren zur Herstellung von Polybutylenterephthalat (PBT) aus Butandiol (BDO) und Terephthalsäure (TPA), bei dem ein Gemisch aus BDO und TPA in Gegenwart einer Alkyltitanat enthaltenden Katalysatorlösung bei Temperaturen im Bereich von 130 bis 260 °C einer Veresterung und das Produkt der Veresterung einer Polykondensation unterworfen wird, **dadurch gekennzeichnet, dass** die Katalysatorlösung 0,05 bis 10 Gew.-% Alkyltitanat, 85 bis 99 Gew.-% BDO, 50 bis 50000 ppm Dicarbonsäure und/oder Hydroxycarbonsäure und/oder Hydroxyalkyldicarbonsäuremonoester und höchstens 0,5 Gew.-% Wasser enthält.

2. Verfahren zur Herstellung von Polybutylenterephthalat (PBT) aus Butandiol (BDO) und Dimethylterephthalat (DMT), bei dem ein Gemisch aus BDO und DMT in Gegenwart einer Alkyltitanat enthaltenden Katalysatorlösung bei Temperaturen im Bereich von 130 bis 260 °C einer Umesterung und das Produkt der Umesterung einer Polykondensation unterworfen wird, **dadurch gekennzeichnet, dass** die Katalysatorlösung 0,05 bis 10 Gew.-% Alkyltitanat, 85 bis 99 Gew.-% BDO, 50 bis 50000 ppm Dicarbonsäure und/oder Hydroxycarbonsäure und/oder Hydroxyalkyldicarbonsäuremonoester und höchstens 0,5 Gew.-% Wasser enthält.

3. Verfahren nach einem der Ansprüche 1 und 2, **dadurch gekennzeichnet, dass** der Gehalt an Dicarbonsäure und/oder Hydrocarbonsäure und/oder Hydroxyalkyldicarbonsäuremonoester 50 bis 30000 ppm beträgt.

4. Verfahren nach einem der Ansprüche 1 bis 3, **dadurch gekennzeichnet, dass** BDO mit Alkyltitanat bei Temperaturen von 50 bis 230 °C gemischt und dieser Mischung Dicarbonsäure und/oder Hydroxycarbonsäure und/oder Hydroxyalkyldicarbonsäuremonoester zugesetzt wird.

5. Verfahren nach einem der Ansprüche 1 bis 3, **dadurch gekennzeichnet, dass** BDO mit Dicarbonsäure und/oder Hydrocarbonsäure und/oder Hydroxyalkyldicarbonsäuremonoester bei Temperaturen von 50 bis 230 °C gemischt und dieser Mischung Alkyltitanat zugesetzt wird.

6. Verfahren nach Anspruch 1, **dadurch gekennzeichnet, dass** man aus der Veresterungsstufe ein BDO, Wasser und Dicarbonsäure enthaltendes Dampfgemisch abzieht, Wasser gegebenenfalls zusammen mit leicht siedenden Komponenten abtrennt, das Dampfgemisch kondensiert und dem eine Temperatur von 50 bis 230 °C aufweisenden Kondensat Alkyltitanat zumischt.

7. Verfahren nach einem der Ansprüche 1 bis 6, **dadurch gekennzeichnet, dass** als Dicarbonsäure eine oder mehrere im Gemisch der Terephthalsäure, Isophtalsäure, Oxalsäure, Malonsäure und Bernsteinsäure eingesetzt wird.

8. Verfahren nach einem der Ansprüche 1 bis 6, **dadurch gekennzeichnet, dass** als Hydroxycarbonsäure eine oder mehrere im Gemisch der 3-Hydroxybenzoesäure, 4-Hydroxybenzoesäure, 3-Hydroxybuttersäure, Hydroxypropionsäure und Glykolsäure eingesetzt wird.

9. Verfahren nach einem der Ansprüche 1 bis 6, **dadurch gekennzeichnet, dass** als Hydroxyalkyldicarbonsäuremonoester ein Hydroxybutylterephthalsäuremonoester eingesetzt wird.

10. Verfahren nach einem der Ansprüche 1 bis 9, **dadurch gekennzeichnet, dass** als Alkyltitanat Tetrabutylorthotitanat eingesetzt wird.

11. Verfahren nach einem der Ansprüche 1 bis 10, **dadurch gekennzeichnet, dass** Katalysatorlösung zusätzlich in mindestens einer der Veresterungsstufen nachgeschalteten Polykondensationsstufe eingebracht wird.

## Claims

1. A Method of manufacture of polybutaneterephthalate (PBT) from butanediol (BDO) and terephthalic acid (TPA), in which a mixture of BDO and TPA in presence of an alkyl titanate containing catalyst solution at temperatures in the range from 130 to 260 °C, an esterification and the product of the esterification is subjected to a polycondensation, **characterized in that** the catalyst solution contains 0.05 to 10 wt% alkyl titanate, 85 to 99 wt% BDO, 50 to 50000 ppm dicarboxylic acid and/or hydroxycarboxylic acid and/or hydroxyalkyldicarboxylic acidmonoester and at the most 0.5 wt% water.

2. A Method of manufacture of polybutaneterephthalate (PBT) from butanediol (BDO) and dimethylterephthalate (DMT) in which a mixture of BDO and DMT in presence of a catalyst solution containing an alkyl titanate at temperatures in the range from 130 to 260 °C, a transesterification and the product of the transesterification is subjected to a polycondensation, **characterized in that** the catalyst solution contains 0.05 to 10 wt% alkyl titanate, 85 to 99 wt% BDO, 50 to 50000 ppm dicarboxylic acid and/or hydroxycarboxylic acid and/or hydroxyalkyldicarboxylic acidmonoester and at the most 0.5 wt% water.

3. The method according to one of the Claims 1 and 2, **characterized in that** the content of dicarboxylic acid and/or hydrocarboxylic acid and/or hydroxyalkyldicarboxylicacidmonoester is between 50 and 30000 ppm.

4. The method according to one of Claims 1 trough 3, **characterized in that** BDO is mixed with alkyl titanate at temperatures from 50 to 230 °C and to this mixture dicarboxylic acid and/or hydroxycarboxylic acid and/or hydroxyalkyldicarboxylicacidmonoester is added.

5. The method according to one of Claims 1 through 3, **characterized in that** BDO mixed with dicarboxylic acid and/or hydrocarboxylic acid and/or hydroxyalkyldicarboxylicacidmonoester at temperatures of 50 to 230 °C and alkyl titanate is added to this mixture.

6. The method according to Claim 1, **characterized in that** a vapor mixture containing BDO, water and dicarboxylic acid is withdrawn from the esterification stage, water separates, if necessary together with low boiling components, the vapor mixture condenses and alkyl titanate mixes with the condensate produced at a temperature of 50 to 230 °C.

7. The method according to one of Claims through 6, **characterized in that** as the dicarboxylic acid, one or a plurality of terehthalic acid, isophthalic acid, oxalic acid, malonic acid and succinic acid are utilized in the mixture.

8. The method according to one of Claims 1 through 6, **characterized in that** as hydroxycarboxylic acid one or a plurality of 3-hydroxybenzoic acid, 4-hydroxybenzoic acid, 3-hydroxybutyric acid, hydroxypropionic acid and glycolic acid is utilized in the mixture.

9. The method according to one of Claims 1 through 6,
**characterized in that** a hydroxybutylterephthalic acidmonoester is utilized as hydroxyalkyldicarboxylic acidmonoester.

10. The method according to one of Claims 1 through 9, **characterized in that** as alkyl titanate, tetrabutylorthotitanate is utilized.

11. The method according to one of Claims 1 through 10, **characterized in that** the catalyst solution is employed in at least one downstream polycondensation stage of the esterification stages.

## Revendications

1. Procédé de préparation de téréphthalate de polybutylène (TPB) à partir de butanediol (BDO) et d'acide téréphthalique (ATP), par lequel un mélange de BDO et d'ATP est soumis, en présence d'une solution de catalyse contenant un alkyltitanate, à des températures situées dans la plage de 130 à 260 °C, à une estérification et le produit de l'estérification est soumis à une polycondensation, **caractérisé en ce que** la solution de catalyse contient de 0,05 à 10 % en poids d'alkyltitanate, de 85 à 99 % en poids de BDO, 50 à 50000 ppm d'acide dicarboxylique et/ou d'acide hydroxycarboxylique et/ou de monoester d'acide hydroxyalkyldicarboxylique et au maximum 0,5 % en poids d'eau.

2. Procédé de préparation de téréphthalate de polybutylène (TPB) à partir de butanediol (BDO) et de diméthyltéréphthalate (DMT), par lequel un mélange de BDO et de DMT est soumis, en présence d'une solution de catalyse contenant un alkyltitanate, à des températures situées dans la plage de 130 à 260 °C, à une transestérification et le produit de la transestérification est soumis à une polycondensation, **caractérisé en ce que** la solution de catalyse contient de 0,05 à 10 % en poids d'alkyltitanate, de 85 à 99 % en poids de BDO, 50 à 50000 ppm d'acide dicarboxylique et/ou d'acide hydroxycarboxylique et/ou de monoester d'acide hydroxyalkyldicarboxylique et au maximum 0,5 % en poids d'eau.

3. Procédé selon l'une quelconque des revendications 1 et 2, **caractérisé en ce que** la teneur en acide dicarboxylique et/ou en acide hydrocarboxylique et/ou en monoester d'acide hydroxyalkyldicarboxylique va de 50 à 30000 ppm.

4. Procédé selon l'une quelconque des revendications 1 à 3, **caractérisé en ce que** le BDO est mélangé à l'alkyltitanate à des températures de 50 à 230 °C et qu'on ajoute à ce mélange de l'acide dicarboxylique et/ou de l'acide hydroxycarboxylique et du monoester d'acide hydroxyalkyldicarboxylique.

5. Procédé selon l'une quelconque des revendications 1 à 3, **caractérisé en ce que** le BDO est mélangé à de l'acide dicarboxylique et/ou de l'acide hydrocarboxylique et/ou du monoester d'acide hydroxyalkyldicarboxylique à des températures de 50 à 230 °C et qu'on ajoute à ce mélange de l'alkyltitanate.

6. Procédé selon la revendication 1, **caractérisé en ce qu'**on extrait du niveau estérification un mélange vaporeux contenant du BDO, de l'eau et de l'acide dicarboxylique, qu'on élimine l'eau, le cas échéant en même temps que les composants bouillant facilement, qu'on condense le mélange vaporeux et qu'on y ajoute un condensé d'alkyltitanate présentant une température de 50 à 230 °C.

7. Procédé selon l'une quelconque des revendications 1 à 6, **caractérisé en ce qu'**on utilise comme acide dicarboxylique un ou plusieurs en mélange parmi les acides téréphthalique, isophtalique, oxalique, malonique et succinique.

8. Procédé selon l'une quelconque des revendications 1 à 6, **caractérisé en ce qu'**on utilise comme acide hydroxycarboxylique un ou plusieurs en mélange parmi les acides 3-hydroxybenzoïque, 4-hydroxybenzoïque, 3-hydroxybutyrique, hydroxypropionique et glycolique.

9. Procédé selon l'une quelconque des revendications 1 à 6, **caractérisé en ce qu'**on utilise comme monoester d'acide hydroxyalkyldicarboxylique un monoester d'acide hydroxybutyltéréphthalique.

10. Procédé selon l'une quelconque des revendications 1 à 9, **caractérisé en ce qu'**on utilise comme alkyltitanate du tétrabutylorthotitanate.

11. Procédé selon l'une quelconque des revendications 1 à 10, **caractérisé en ce que** de la solution de catalyse est incorporée en supplément dans au moins un niveau de polycondensation placé en aval des niveaux d'estérification.
